# EUROPEAN PATENT SPECIFICATION

(11) **EP 3 013 686 B1**
(45) Date of publication and mention of the grant of the patent: **05.04.2017**
(21) Application number: 14752660.2
(22) Date of filing: 30.06.2014
(51) Int. Cl.: B64C 27/20, B64B 1/34, B64C 3/30, B64C 39/02, B64B 1/30

(54) **A MULTI-ROTOR AIRCRAFT**
FLUGZEUG MIT MEHREREN ROTOREN
AÉRONEF MULTIROTOR

(30) Priority: 28.06.2013 IT TO20130543
(43) Date of publication of application: 04.05.2016
(73) Proprietor: Bellezza Quater, Paolo, 10077 San Maurizio Canavese (TO) (IT)
(72) Inventor: Bellezza Quater, Paolo, 10077 San Maurizio Canavese (TO) (IT)
(74) Representative: De Bonis, Paolo
(86) International application number: PCT/IB2014/062731
(87) International publication number: WO 2014/207732

(56) References cited:
- EP-A2- 1 245 257
- WO-A2-2013/052178
- DE-A1- 10 306 200
- NL-C1- 1 017 027
- US-A- 4 685 640
- US-A1- 2006 261 213
- US-A1- 2012 241 552

## Description

### Field of the invention

The present invention relates to multi-rotor aircrafts, in particular of the type including:
- a load-bearing structure; and
- a plurality of propulsion assemblies, each including a rotor that can be driven in rotation about a respective axis of rotation, said propulsion assemblies being coupled to and supported by said load-bearing structure.

The invention has moreover been developed with particular reference to multi-rotor aircrafts of a remote-controlled type.

Examples of multi-rotor aircrafts of a known type can be found, for instance, in NL 1 017 027 C1, US 2012/241552 A1, and US 2006/261213 A1.

### Prior art

Multi-rotor aircraft of a known type, in particular remote-controlled ones, generally comprise a plurality of rotors driven by means of respective propulsion assemblies that are supported by a generally rigid load-bearing structure, for example made of aluminium with box-like or lattice structure.

If, on the one hand, the above load-bearing structure offers very high strength features, on the other hand it is rather disadvantageous in so far as the high stiffness constitutes an excellent vehicle for transmission of vibrations generated by each of the propulsion assemblies along the entire structure. Notwithstanding this, in the case of accidental impact of the aircraft against an obstacle, a load-bearing structure with high stiffness is highly likely to cause serious damage to the obstacle and even to the aircraft itself in so far as in the impact a transmission of forces would occur substantially without any attenuation and such as to cause damage to one or more propulsion assemblies, in addition to the structure itself.

### Object of the invention

The object of the present invention is to solve the technical problems mentioned previously.

In particular, the object of the invention is to provide a multi-rotor aircraft, wherein transmission of vibrations from the engines through the load-bearing structure (and vice versa) is minimized.

### Summary of the invention

The object of the invention is achieved by a multi-rotor aircraft having the features forming the subject of one or more of the following claims, which constitute an integral part of the technical disclosure herein provided in relation to the invention. In particular, the object of the invention is achieved by a multi-rotor aircraft presenting the features of claim 1.

### Brief description of the drawings

The invention will now be described with reference to the attached figures, which are provided purely by way of non-limiting example and in which:
- Figure 1 is a perspective view of a multi-rotor aircraft according to a first embodiment of the invention;
- Figure 2 is a cross-sectional view according to the trace II-II of Figure 1;
- Figure 3 is a side view of a multi-rotor aircraft according to a variant of the embodiment of Figure 1;
- Figures 3A and 3B illustrate variants of the embodiment of Figure 3;
- Figure 4 is a schematic and partially sectioned side view of a multi-rotor aircraft according to a second embodiment of the invention; and
- Figure 4A is a schematic view according to the arrow IV of Figure 4.

### Detailed description

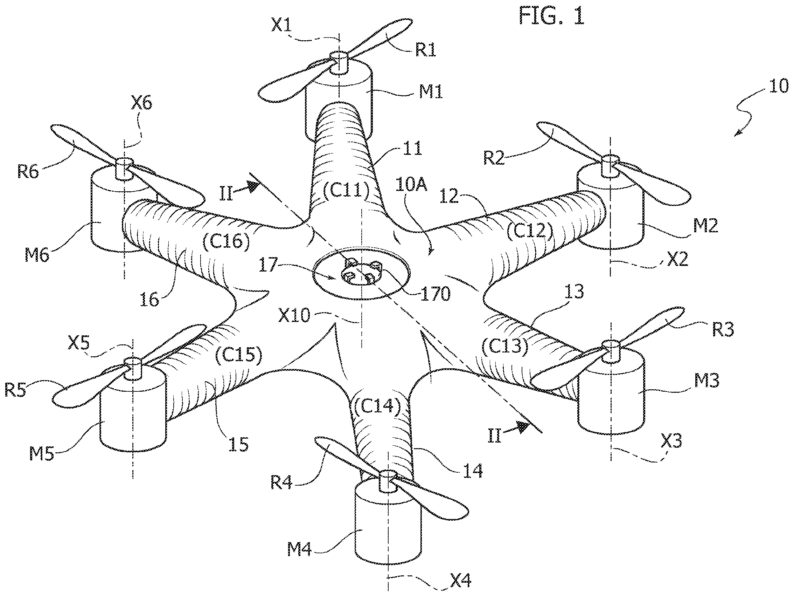

In Figure 1, the reference number 10 designates as a whole a multi-rotor aircraft according to a first embodiment of the invention. The aircraft 10 includes a load-bearing structure 10A having a substantially star-shaped geometry including six arms numbered with the references 11, 12, 13, 14, 15, 16. In the present description, the term "load-bearing structure" is intended to indicate a structure configured so as to be self-supporting and to support statically and dynamically all the components of the aircraft.

The structure 10A illustrated in Figure 1 and described herein by way of example is provided with six arms, but the person skilled in the art will appreciate that the number of arms may range from a minimum of two up to a maximum that depends upon the overall dimensions available.

The load-bearing structure 10A supports a plurality of propulsion assemblies designated by the references M1, M2, M3, M4, M5, M6, each configured for driving in rotation a respective rotor R1, R2, R3, R4, R5, R6 about a corresponding axis X1, X2, X3, X4, X5, X6.

The rotors R1-R6 may be made as multiblade propellers of a free type (as in the figures) or a ducted type. It is moreover possible to envisage an annular protective profile that turns around the aircraft and is coupled to the structure 10A and configured for shielding the blades of the rotors R1-R6. This measure is intended to prevent extraneous objects from being accidentally entrained by the blades and, of course, to prevent persons in the vicinity of the aircraft from possibly getting hurt by the blades themselves during operation.

The propulsion assemblies M1, M2, M3, M4, M5, M6 all include a respective motor for driving the corresponding rotor in rotation. Preferentially, the motor used for driving each rotor is an electric motor, but it is possible to use propulsion assemblies operated by compressed air (or some other gas) or also thermal engines. Of course, the number of propulsion assemblies is variable according to the number of arms of the structure 10A.

In this embodiment, each propulsion assembly M1, M2, M3, M4, M5, M6 is installed at the end of the corresponding arm 11, 12, 13, 14, 15, 16 and is positioned so that the axes X1, X2, X3, X4, X5, X6 of the rotors R1, R2, R3, R4, R5, R6 are all parallel to, and distinct from, one another and substantially parallel with respect to a main axis X10 of the aircraft 10. It is, however, possible to envisage embodiments wherein the axes of the rotors are all convergent.

In variants of the embodiment of Figure 1 it is possible to provide the propulsion assemblies M1, M2, M3, M4, M5, M6 in intermediate positions on the arms 11, 12, 13, 14, 15, 16. This enables an increase in the degree of safety of the aircraft in so far as, by displacing the propulsion assemblies towards the main axis X10, the periphery of the aircraft - that could potentially enter into interference with objects or people - is freed from the rotors, thus averting the possibility of damage to the aforesaid objects or people.

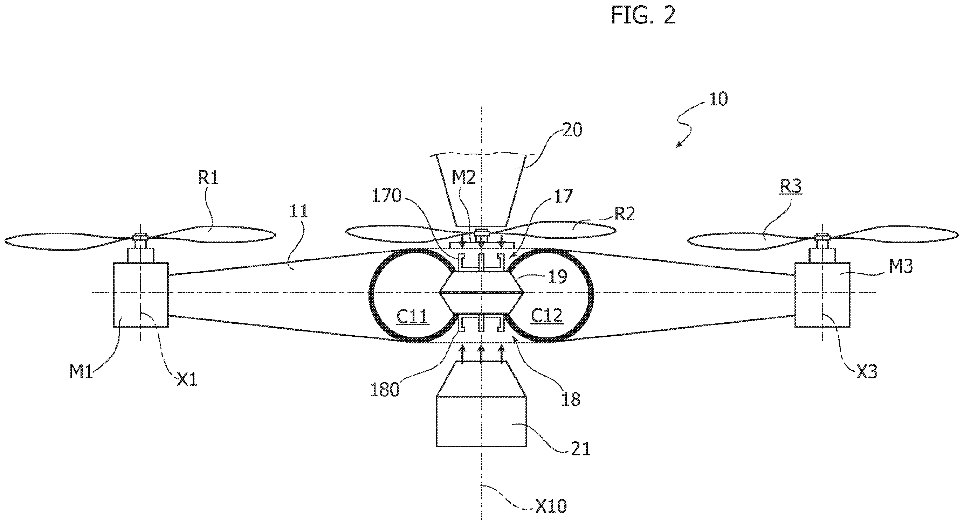

The load-bearing structure 10A is inflatable: the arms 11, 12, 13, 14, 15, 16 are hollow and define within them respective radial chambers C11, C12, C13, C14, C15, C16 (Figures 1 and 2; the references appear in brackets where the chambers are not visible) radiused and communicating with one another to form the structure 10A.

The radial chambers C11, C12, C13, C14, C15, C16 are filled with air or with some other gas so as to provide a definite and stable shape to the structure 10A. In one embodiment, it is also possible to provide a valve that will enable coupling of the load-bearing structure 10 to the exhaust of a vehicle with internal-combustion engine so as to carry out inflation thereof in the event that a compressor is not available.

In the case where it is desired to provide the aircraft 10 illustrated in Figure 1 with a minimal static lift through the inflatable load-bearing structure 10A, it is possible to replace the air for inflation of the chambers C11, C12, C13, C14, C15, C16 with a gas having a higher specific volume (i.e., lower density), for example helium (He).

With reference to Figures 1 and 2, at the point of convergence of all the arms 11, 12, 13, 14, 15, 16, i.e., of the axis X10, a first receptacle 17 and a second receptacle 18 are provided having a generally flared shape preferentially equipped with a respective coupling device 170, 180 set on the bottom of each of them. The receptacles 17, 18 are coaxial to one another and to the axis X10.

The bottoms of each receptacle can be fixed to a spacer element 19 that moreover offers a supporting action. It is moreover possible to provide the spacer 19 with a hollow structure so as to house therein the batteries needed for supply of the propulsion assemblies M1, M2, M3, M4, M5, M6 and possibly an electronic control unit operatively connected to the propulsion assemblies for control thereof. In this connection, it should be noted that possible wiring from and to the batteries and/or the electronic control unit can be routed within the chambers C11, C12, C13, C14, C15, C16, remaining non-visible from the outside. Alternatively, the electric cables can be held in position (preventing oscillation and uncontrolled movement thereof during flight) by means of a mesh structure of an elastic type applied to the load-bearing structure 10. This would moreover enable the pressure inside the structure to be maintained, hence exerting a continuous adjustment action, keeping the pressure at the desired values and at the same time preventing damage from overpressure. Furthermore, in the event of a small tearing of the inflatable load-bearing structure, the aforesaid mesh structure enables reduction of the dimensions of the tearing by means of an elastic action, thereby delaying deflation and maintaining the stiffness of the structure.

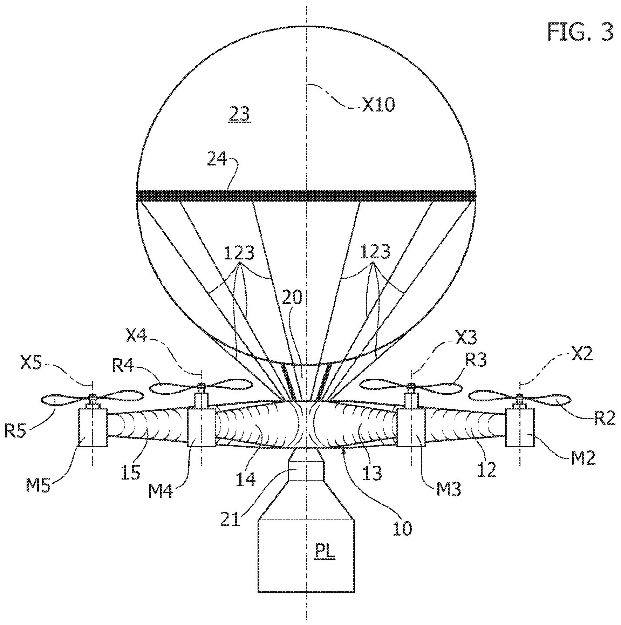

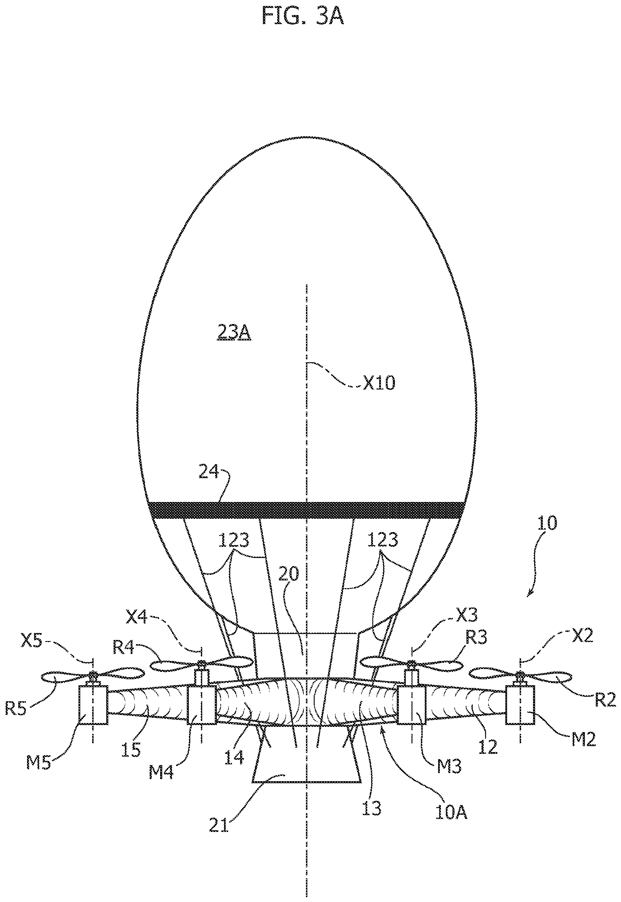

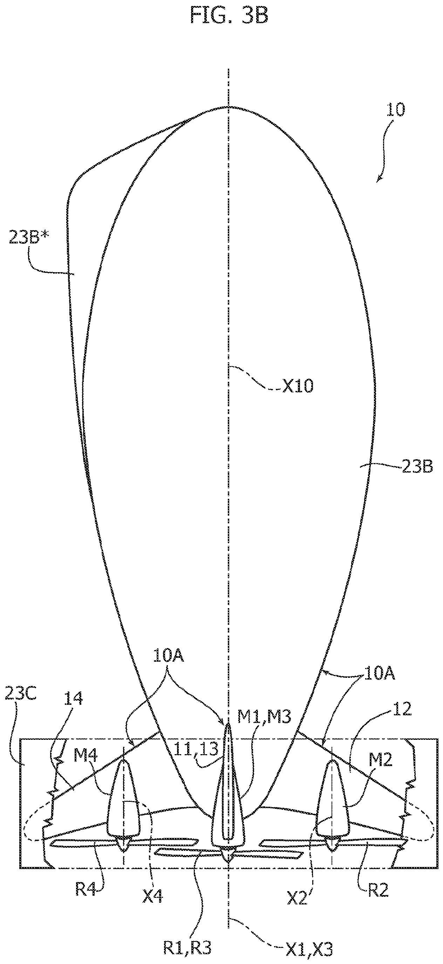

In any case, in some embodiments, the spacer 19 may not be provided. A possible example is constituted by the embodiments of the type just described, in which on account of the presence of the mesh structure it is possible to eliminate the spacer 19. With reference to Figures 2 and 3, the receptacles 17, 18 are configured for receiving, respectively, a first coupling element 20 and a second coupling element 21 having a conical or frustoconical shape (possibly cylindrical, in the case where the overall dimensions were so to allow) and preferably hollow, which enable coupling of further equipment to the aircraft 10. With reference to Figure 3, by means of the first coupling element 20 an aerostatic balloon 23 (in this embodiment, an aerostat of a spherical shape) configured for providing a static lift to the aircraft 10 in addition to the lift that can be generated via the rotors R1, R2, R3, R4, R5, R6 may be coupled to the aircraft 10. As it is known, the static lift is obtained by inflation of the balloon 23 with a gas having a higher specific volume (hence lower density) than that of the air in the environment, for example helium (He).

The aerostatic balloon 23 is held in position on the coupling element 20, for example by means of pull wires 123 that can have a first end fixed to the aerostatic balloon 23 (for example, to a band 24 applied thereto) and a second end fixed within the receptacle 17. The hollow structure of the coupling element 20 makes it possible to get the latter to work as a cup for receiving in an optimal way the balloon 23 and limiting the displacements thereof to a minimum, thanks to the joint action of the pull wires 123 (the coupling element 20 works in a way at least roughly resembling the cup that keeps chocolate Easter eggs in an upright position).

The hollow structure of the element 20 moreover makes it possible to house therein a payload or equipment such as the batteries for supplying the propulsion assemblies and/or the electronic control unit of the aircraft 10, in the case where these have not already been accommodated elsewhere in the aircraft 10.

The coupling device 170, preferably a device with mechanical jaws, can be exploited for improving fixing of the element 20 to the load-bearing structure 10A: in this connection, the element 20 can be machined so as to obtain on the surface thereof a profile specifically designed for coupling with the jaws of the coupling device 170.

Further variants of the embodiment illustrated in Figure 3 are represented in Figures 3A and 3B. The reference numbers identical to the ones already used designate components that are similar or identical to those already described.

With reference to Figure 3A, the aerostatic balloon 23 - of a substantially spherical shape - can be replaced by an aerostatic balloon, designated by the reference number 23A, having a substantially ellipsoidal shape. Preferably, as illustrated in Figure 3A, one of the three axes of the ellipsoidal shape of the balloon 23A is considerably greater than the two axes orthogonal thereto (in this case, it is the longitudinal axis of the balloon 23A, aligned to the axis X10, that is greater). Also in this variant, the balloon 23A is held in position on the coupling element 20, for example, by means of the pull wires 123, which may have a first end fixed to the aerostatic balloon 23A (for example, to the band 24 applied thereto) and a second end fixed, for example, to the second coupling element 21. The hollow structure of the coupling element 20 makes it possible to get the latter to work as a cup for receiving in an optimal way the balloon 23A and limit the displacements thereof to a minimum, thanks to the joint action of the pull wires 123.

Figure 3B (in which, where double references appear, the second reference is used to indicate an identical component arranged in an identical way but not visible in the figure) illustrates, instead, a variant in which the aircraft 10 is equipped with an aerostatic balloon 23B having an ellipsoidal shape with features similar to the balloon 23A, but no longer coupled by means of the element 20 to the load-bearing structure 10A, but rather rendered integral therewith. In the embodiment illustrated in Figure 3B, the aerostatic balloon 23B provides a continuum with the rest of the aircraft.

In one embodiment, for example like the one illustrated in Figure 3B, the structural continuity consists in providing the balloon 23B integrally with the load-bearing structure 10A, in particular with the arms 11, 12, 13, 14 thereof (in this case only four arms are provided, but of course their number may be any).

In this case, the balloon 23B would itself come to form part of the inflatable load-bearing structure 10A, the arms of which would thus be obtained (as may be seen in Figure 3B) as (inflatable) winglets on which the propulsion assemblies M1, M2, M3, M4 are installed. The arms can be inflated independently with respect to the balloon 23B (in this case, the arms 11-14 can be inflated with air or some other gas, not necessarily lighter than air, whereas the balloon 23B will have to be inflated with gas lighter than air, necessary for providing static lift to the balloon) or can be provided communicating therewith so that they can be inflated together with it (in the latter case also the arms 11-14 will have to be inflated with gas lighter than air).

Alternatively, the arms 11, 12, 13, 14 can be obtained as rigid winglets with the function of connection of the propulsion assemblies to the balloon 23B, which would alone come to constitute the inflatable load-bearing structure of the aircraft 10.

Finally, preferentially, a fin 23B is provided on one side of the balloon 23B, and an annular shielding structure 23C, coupled to the arms 11-14 or alternatively to the balloon 23B itself, is provided around the propulsion assemblies M1-M4 to prevent accidental entraining of extraneous objects and/or injury to people in the proximity of the aircraft.

On the opposite side of the load-bearing structure 10A, the second coupling element 21 is configured for operation as landing foot and as further compartment for housing the payload or the aforementioned equipment inside it. In this case, the presence of the coupling device 180 is preferable in so far as it enables, in addition to a better maintenance in position of the element 21 (with modalities similar to what has already been described for the coupling device 170), also fast disengagement thereof to take out the payload. In any case, unlike the receptacle 17, the presence of the coupling device 180 proves decidedly more advisable above all owing to the fact that the element 21 is suspended underneath the aircraft 10 during flight.

Notwithstanding this, as may be seen in Figure 3, on the coupling element 21 there may be fixed, for example with fixing devices, a suspended payload PL. It is of course possible - if the masses involved so allow - to provide both of the arrangements on the landing foot 21, i.e., a payload inside it and on it.

Operation of the aircraft 10 is described in what follows.

The aircraft 10 is configured for practically vertical takeoff and landing by synchronous or differential actuation of the propulsion assemblies M1, M2, M3, M4, M5, M6 (with minimal differences in order to compensate for possible oscillations of the aircraft during the manoeuvre). This is possible by driving the propulsion assemblies by means of the electronic control unit on board the aircraft itself, which is in turn configured for communicating with a remote-control device, for example a radiofrequency device, for example a radio control.

The pitch, roll, and yaw manoeuvres can be performed, in a way per se known, by differentiated actuation of the propulsion assemblies and of the rotors R1, R2, R3, R4, R5, R6 controlled thereby.

During flight, the vibrations generated by rotation of the rotors R1, R2, R3, R4, R5, R6 and in general induced by operation of the propulsion assemblies M1, M2, M3, M4, M5, M6 remain substantially confined, so to say, to the area of coupling between the propulsion assembly and the load-bearing structure 10A. In fact, the latter is characterized by a frequency response that is capable to filter the majority of the frequencies typical of operation of the propulsion assemblies, this on account of the greater flexibility and deformability thereof as compared, for example, to structures made of metal or rigid composite material, and of the presence of air (or some other gas, as mentioned) inside.

The result is that of a flight that is much more regular and linear, with minimal need for corrections (hence, for differentiated actuation of the rotors and of the propulsion assemblies), and of a controllability that is decidedly better as compared to multi-rotor aircraft of a known type. Furthermore, the inflatable load-bearing structure 10A enables filtering of an entire range of frequencies that are of disturbance for integrated sensors on board the aircraft (for example, the avionics on board the aircraft 10).

Notwithstanding this, the person skilled in the art will appreciate how in the event of accidental impact against an obstacle, neither the latter, nor - least of all - the aircraft will undergo significant damage: the kinetic energy converted during the impact is absorbed by the deformation of the load-bearing structure 10A, which will return into its normal configuration as soon as the impulsive event has terminated.

To be noted in this connection is the advantage in using an inflatable load-bearing structure: it is, in fact, the very type of structure that at the same time will guarantee the characteristics of structural strength necessary for sustentation of the aircraft 1 and that will tolerate locally considerable (and reversible) deformations without significant global geometrical alterations.

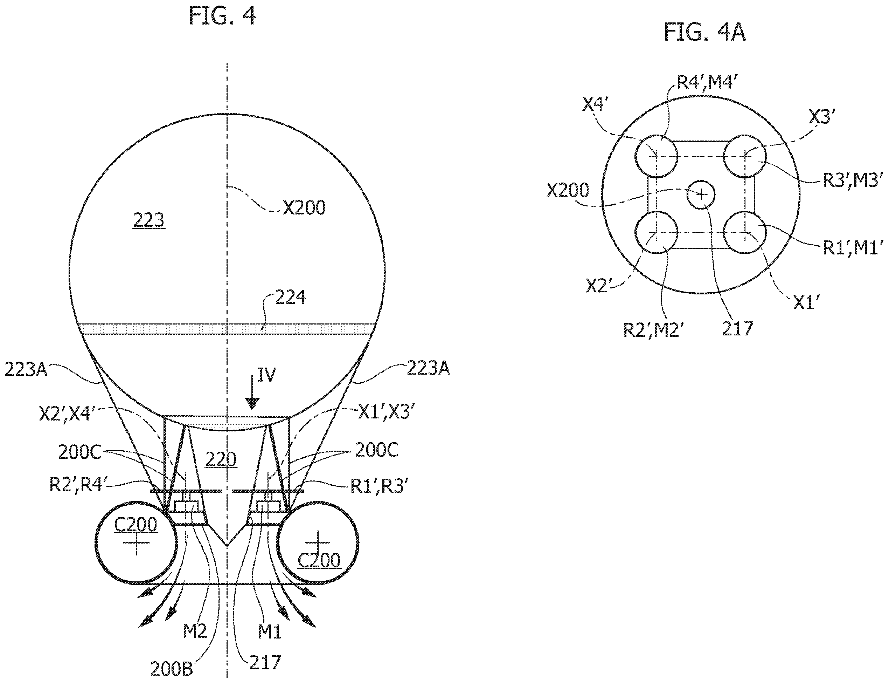

With reference to Figures 4 and 4A, the reference number 200 designates as a whole a multi-rotor aircraft according to a second embodiment of the invention. The aircraft 200 includes a load-bearing structure 200A having a substantially toroidal geometry (hence, an axisymmetrical geometry) with central axis of symmetry X200.

The load-bearing structure 200A supports a plurality of propulsion assemblies designated by the references M1', M2', M3', M4', each configured for driving a respective rotor R1', R2', R3', R4' that rotates about a corresponding axis X1', X2', X3', X4'. The propulsion assemblies M1', M2', M3', M4' all include a respective preferentially electric motor for driving the corresponding rotor in rotation. Other solutions are possible, in a way identical to what has been described for the propulsion assemblies M1-M6.

In this embodiment, each propulsion assembly M1', M2', M3', M4' is installed on the load-bearing structure 200A so that the axes X1', X2', X3', X4' are arranged at the vertices of a square mesh and are parallel to each another and to the axis X200. Furthermore, each of the rotors R1', R2', R3', R4' may be of a free type (as illustrated in the figure) or a ducted type.

In order to facilitate positioning thereof on a load-bearing structure such as the structure 200A, since a toroidal geometry is less likely to offer sites for convenient installation of the propulsion assemblies, the latter can be positioned on an auxiliary frame 200B having only the function of fixing the position, which in turn forms part of, and is coupled with, the load-bearing structure 200A. The frame 200B is moreover provided with a receptacle 217 similar to the receptacle 17 of the aircraft 10.

In variants of the embodiment of Figures 4, 4A, it is possible to envisage a number of propulsion assemblies possibly other than four (for example, three or five or six), provided that the overall dimensions enable arrangement of the propulsion assemblies so that the flow of air processed by the respective rotors will flow off practically entirely within the hole of the toroid that constitutes the structure 200A, as will emerge clearly in what follows.

Like the structure 10A, the load-bearing structure 200A is inflatable: for this purpose, it is made with a hollow structure defining an annular chamber C200 that is filled with air (or, in the case where it is desired to bestow a minimal static lift on the aircraft 200, another gas with a specific volume higher than that of air). Other gases may be used for inflating the structure 200A, for example the exhaust gases of an aircraft equipped with thermal engine as already described with reference to the aircraft 10.

With reference to Figure 4, the receptacle 217 is configured for receiving a coupling element 220 having a conical or frustoconical shape (possibly cylindrical, in the case where the overall dimensions were so to allow) and preferably hollow, which enables coupling of further equipment to the aircraft 10.

By means of the first coupling element 220 it is possible to couple to the aircraft 200 an aerostatic balloon 223 (in this embodiment an aerostat of a spherical shape, similar to the balloon 23) configured for bestowing a significant static lift on the aircraft 200 in addition to the lift that can be generated via the rotors R1', R2', R3', R4'.

In a way similar to the balloon 23, the aerostatic balloon 223 is held in position on the coupling element 20, for example, by means of pull wires 223A that can have a first end fixed to the aerostatic balloon 223 (for example, to a band 224 applied thereto) and a second end fixed within the receptacle 217. In this specific embodiment, the auxiliary frame 200B not only receives the coupling element 220 but is equipped with a mount 200C that contributes further to the positioning of the balloon 223 and that moreover has openings for intake of fluid from the propulsion assemblies during operation.

As already noted in regard to the balloon 23, the hollow structure of the coupling element 220 makes it possible to get the latter to work as a cup for receiving the balloon 223 in an optimal way and limit the displacements thereof to a minimum, thanks to the joint action of the pull wires 223A (the coupling element 220 works, like the coupling element 20, in a way at least roughly resembling the cup used for keeping chocolate Easter eggs in an upright position).

Finally, it is to be noted that the hollow structure of the element 220 enables housing therein of a payload and equipment such as the batteries for supplying the propulsion assemblies and/or the electronic control unit of the aircraft 200. It should be noted, in fact, that housing of batteries and of the electronic control unit within the chamber C200 would appear to be rather inconvenient in an embodiment of this sort.

Operation of the aircraft 200 is described in what follows.

Like the aircraft 10, the aircraft 200 is configured for practically vertical takeoff and landing by means of synchronous driving (with minimal differences for compensating for possible oscillations of the aircraft during manoeuvre) of the propulsion assemblies M1', M2', M3', M4', driven by means of the electronic control unit on board the aircraft, which is in turn controlled remotely, for example, by means of a remote-control device, for instance, a radiofrequency device, for example, a radio control.

The pitch, roll, and yaw manoeuvres can be performed, in a way per se known, by differentiated driving of the propulsion assemblies and of the rotors R1', R2', R3', R4'. Moreover to be noted is the installation of the propulsion assemblies so that the fluid flow processed thereby be sent on substantially into the hole at the centre of the toroid, thereby enabling control of the jet resulting from the action of the propulsion assemblies themselves by the Coanda effect, as may be seen in Figure 4 and represented by the sets of three arrows that follow the profile of the toroid. In other words, the fluid flow discharged by the propulsion assemblies thus adheres by the Coanda effect to the walls of the hole of the toroid.

For this purpose, the auxiliary frame 200B may have the shape of a convergent-divergent nozzle that reproduces the profile of the walls of the toroid corresponding to the structure 200A so as to improve performance further.

As in the case of the aircraft 10, during flight, the vibrations generated by rotation of the rotors and in general induced by operation of the propulsion assemblies remain substantially confined, so to say, to the area of coupling between the propulsion assembly and the load-bearing structure 200A.

Finally, it should be noted, both as regards operation of the aircraft 10 and as regards operation of the aircraft 200, how coupling with (or the provision of) the aerostatic balloon 23, 23A, 23B, 223 (of whatever type it may be) leads to further significant benefits. In the first place, thanks to the aerostatic balloon 23, 23A, 23B, 223 it is possible to reduce the power installed on board the aircraft (and consequently the size of the rotors) since, thanks to the static lift provided by the balloon, it is possible to reduce the amount of lift the generation of which is entrusted to the propulsion assemblies and to the rotors driven thereby. In a preferred embodiment, the propulsion assemblies have the task of generating a lift of less than 50% of the total lift of the aircraft. This clearly has beneficial effects also on the overall dimensions and on the possibility of transporting additional payload: smaller engines have a lower mass and smaller overall dimensions, which enables destination of a greater amount of the mass and of the overall dimensions of the aircraft to the payload, compensating for any possible deficiency of lift with increase of the static lift.

Furthermore, the aerostatic balloon 23, 23A, 23B, 223 enables stabilization of the aircraft 10, 200, so to speak, by a pendulum effect. In fact, the point of application of the static lift of the aerostatic balloon is positioned above the centre of gravity of the aircraft 10, 20, thus providing a pendulum system.

More specifically, it is possible to establish an analogy with a pendulum in which the oscillating mass can be identified with the load-bearing structure 10A, 200A and the propulsion assemblies (which concentrate the majority of the mass of the means), while the point of application of the static lift of the aerostatic balloon represents the virtual pivot point.

The presence of the balloon 23, 23A, 23B, 223 (of whatever type it may be) moreover prevents excessive increase of the lateral component of velocity of the means. The stabilization by the pendulum effect that has just been described above implies that manoeuvres of abrupt lateral displacement are prevented with a slight inclination of the aircraft (basically on account of the fact that the inertial forces associated to the ensemble constituted by the load-bearing structure and the propulsion assemblies are compensated by the static thrust of the balloon), which reduces the component of lateral thrust.

This entails also the fact that the aircraft according to the invention presents a lower sensitivity to sudden variations of trim due to malfunctioning of the propulsion system or to sudden erroneous commands.

With specific reference to aircraft 10 that are equipped with the balloons 23A or 23B, it is to noted that they are able to fly with horizontal trim: maintaining a thrust differential between the propulsion assemblies that enables balancing of the overturning torque (with respect to the horizontal position) due to the weight of the propulsion assemblies, it is basically possible to keep the aircraft 10 in horizontal flight governing it substantially as a dirigible. The propulsive thrust would be generated and modulated, of course, via the propulsion assemblies M1-M4.

Furthermore, in all aircrafts according to the invention equipped with aerostatic balloon there is an automatic compensation of any partial failure to the sustentation assemblies, and, in the event of total breakdown of the propulsion assemblies, the speed of descent can be significantly contained thanks to the static lift and to the aerodynamic resistance of the balloon, enabling landing in total safety. The balloon 23, 23A, 23B, 223 moreover enables compensation of the asymmetries in thrust due to failure of the engines.

It should moreover be noted that, for the purposes of stabilization by the pendulum effect, a non-negligible contribution is offered by accommodating the payload PL in a suspended position underneath the aircraft (10 or 200).

The aircraft 10 and 200 can finally be provided with further equipment in order to meet the needs dictated by applications that may even differ considerably from those of aircraft for transport of payload.

For example, in one embodiment, the aircraft 10 and 200 are equipped with one or more windable/unwindable ropes fixed to the load-bearing structure 10A, 200A in order to enable use of the aircraft in a control line flight regime.

Furthermore, the load-bearing structure may be provided with an outer surface having a highly visible or else luminescent (fluorescent or phosphorescent) colouring in such a way as to enable identification thereof also at a great distance, for example for warning in emergency conditions and/or conditions of poor visibility. The same may apply (and this is in general a preferable solution) to the aerostatic balloon 23, 23A, 23B, 223, basically on account of the large cross section that increases considerably the visibility of the aircraft.

The aircraft 10, 200 may moreover form part of the equipment of any kind of vehicle for land or water rescue, on which it may, for example, function as air warning system in the eventuality of emergency situations such as, for example, a road accident, a forest fire, or a fire on board a watercraft.

Furthermore, in the case where the aircrafts 10, 200 are used as equipment for land or water emergency squads, it may be equipped with apparatuses for receiving and repeating a radiofrequency signal, in particular for setting up a radio bridge or a cellular communication network. In this way, the aircraft 10, 200, kept in stationary flight and possibly constrained to the ground, can function as radio or telephone repeater so as to create a radio bridge or a local cellular network even in areas where the coverage is absent (for both types of communication means), considerably facilitating rescue operations.

Nevertheless, the same use can be made in situations wherein there is no need for emergency intervention but it is simply required to set up a private cellular communication network.

It is moreover possible to equip the aircraft 10, 200 with fixed or flashing light sources, which can be preferentially controlled by the on-board control unit. Provision of these light sources moreover enables use of the aircraft 10, 200, for example, as Morse warning systems, generating light signals corresponding to the encoding of the Morse alphabet simply by controlling turning-on and turning-off of the light sources via the control unit (and the remote control associated thereto). The advantage deriving from application of the aforesaid light sources is clearly amplified when the application involves also the aerostatic balloon 23, 23A, 23B, 223.

Of course, the details of construction and the embodiments may vary widely with respect to what has been described and illustrated herein, without thereby departing from the scope of protection of the present invention, as defined by the annexed claims.

## Claims

1. A multi-rotor aircraft (10) including:
- a load-bearing structure (10A); and
- a plurality of propulsion assemblies (M1, M2, M3, M4, M5, M6) each including a rotor (R1, R2, R3, R4, R5, R6), which can be driven in rotation about a respective axis (X1, X2, X3, X4, X5, X6), said propulsion assemblies being coupled to and supported by said load-bearing structure (10A),
wherein said load-bearing structure (10A) is inflatable (C11, C12, C13, C14, C15, C16), and
wherein said load-bearing structure (10A) has a star-shaped geometry with each of said propulsion assemblies (M1, M2, M3, M4, M5, M6) installed on a corresponding arm of the star, preferably at the end thereof.

2. The aircraft (10) according to Claim 1, wherein each propulsion assembly (M1, M2, M3, M4, M5, M6) can be driven independently.

3. The aircraft (10) according to Claim 2, wherein the rotors (R1, R2, R3, R4, R5, R6) are rotatable about axes (X1, X2, X3, X4, X5, X6) parallel to one another.

4. The aircraft (10) according to Claim 1, further comprising an aerostat, in particular a balloon (23; 23A; 23B), coupled to said load-bearing structure (10A) and configured for providing a static lift for said aircraft (10).

5. The aircraft (10) according to Claim 4, wherein said aerostat (23; 23A) is coupled to said load-bearing structure (10A) by means of a coupling element (20) having a conical or frustoconical geometry and a hollow structure.

6. The aircraft (10) according to Claim 5, wherein said coupling element (20) is inserted in a receptacle (17) of said load-bearing structure (10A) provided with a locking device (170).

7. The aircraft (10) according to any one of the preceding claims, further including a landing foot (21) coupled to said load-bearing structure (10A), said landing foot (21) being configured for transport of a payload (PL) thereon, therein, or both.

## Patentansprüche

1. Luftfahrzeug (10) mit mehreren Rotoren, das beinhaltet:
eine Tragstruktur (10A); und
eine Vielzahl von Antriebsanordnungen (M1, M2, M3, M4, M5, M6), die jeweils einen Rotor (R1, R2, R3, R4, R5, R6) beinhalten, der zur Rotation um eine jeweilige Achse (X1, X2, X3, X4, X5, X6) angetrieben werden kann, wobei die Antriebsanordnungen mit der Tragstruktur (10A) gekoppelt sind und davon getragen werden,
wobei die Tragstruktur (10A) aufblasbar (C11, C12, C13, C14, C15, C16) ist, und
wobei die Tragstruktur (10A) eine sternförmige Geometrie aufweist, bei der die Antriebsanordnungen (M1, M2, M3, M4, M5, M6) jeweils an einem entsprechenden Arm des Sterns montiert sind, vorzugsweise an einem Ende davon.

2. Luftfahrzeug (10) nach Anspruch 1, wobei die Antriebsanordnungen (M1, M2, M3, M4, M5, M6) jeweils unabhängig angetrieben werden können.

3. Luftfahrzeug (10) nach Anspruch 2, wobei die Rotoren (R1, R2, R3, R4, R5, R6) um Achsen (X1, X2, X3, X4, X5, X6) drehbar sind, die parallel zueinander verlaufen.

4. Luftfahrzeug (10) nach Anspruch 1, des Weiteren umfassend einen Aerostat, insbesondere einen Ballon (23; 23A; 23B), der mit der Tragstruktur (10A) gekoppelt und zum Bereitstellen eines statischen Auftriebs für das Luftfahrzeug (10) konfiguriert ist.

5. Luftfahrzeug (10) nach Anspruch 4, wobei der Aerostat (23; 23A) mittels eines Kopplungselements (20), das eine konische oder kegelstumpfförmige Geometrie sowie eine hohle Struktur aufweist, mit der Tragstruktur (10A) gekoppelt ist.

6. Luftfahrzeug (10) nach Anspruch 5, wobei das Kopplungselement (20) in eine Aufnahme (17) der Tragstruktur (10A) eingesetzt ist, die mit einer Verriegelungsvorrichtung (170) versehen ist.

7. Luftfahrzeug (10) nach einem der vorhergehenden Ansprüche, das des Weiteren ein Landegestell (21) aufweist, das mit der Tragstruktur (10A) gekoppelt ist, wobei das Landegestell (21) für den Transport einer Last (PL) darauf, darin oder beides konfiguriert ist.

## Revendications

1. Aéronef à rotors multiples (10) comportant :
- une structure de support de charge (10A) ; et
- une pluralité d'ensembles de propulsion (M1, M2, M3, M4, M5, M6) comportant chacun un rotor (R1, R2, R3, R4, R5, R6), qui peut être entraîné en rotation autour d'un axe respectif (X1, X2, X3, X4, X5, X6), lesdits ensembles de propulsion étant couplés à ladite structure de support de charge (10A) et supportés par celle-ci,
dans lequel ladite structure de support de charge (10A) est gonflable (C11, C12, C13, C14, C15, C16), et
dans lequel ladite structure de support de charge (10A) a une géométrie en étoile avec chacun desdits ensembles de propulsion (M1, M2, M3, M4, M5, M6) installé sur un bras correspondant de l'étoile, de préférence au niveau de l'extrémité de celui-ci.

2. Aéronef (10) selon la revendication 1, dans lequel chaque ensemble de propulsion (M1, M2, M3, M4, M5, M6) peut être entraîné indépendamment.

3. Aéronef (10) selon la revendication 2, dans lequel les rotors (R1, R2, R3, R4, R5, R6) peuvent tourner autour d'axes (X1, X2, X3, X4, X5, X6) parallèles les uns aux autres.

4. Aéronef (10) selon la revendication 1, comprenant en outre un aérostat, en particulier un ballon (23 ; 23A ; 23B), couplé à ladite structure de support de charge (10A) et configuré pour fournir une sustentation statique pour ledit aéronef (10).

5. Aéronef (10) selon la revendication 4, dans lequel ledit aérostat (23 ; 23A) est couplé à ladite structure de support de charge (10A) au moyen d'un élément de couplage (20) ayant une géométrie conique ou tronconique et une structure creuse.

6. Aéronef (10) selon la revendication 5, dans lequel ledit élément de couplage (20) est inséré dans un réceptacle (17) de ladite structure de support de charge (10A) muni d'un dispositif de verrouillage (170).

7. Aéronef (10) selon l'une quelconque des revendications précédentes, comportant en outre un pied d'atterrissage (21) couplé à ladite structure de support de charge (10A), ledit pied d'atterrissage (21) étant configuré pour le transport d'une charge utile (PL) sur celui-ci, dedans, ou les deux.
